# EUROPÄISCHE PATENTSCHRIFT

(11) **EP 1 479 929 B1**
(45) Veröffentlichungstag und Bekanntmachung des Hinweises auf die Patenterteilung: **06.06.2012**
(21) Anmeldenummer: 04009372.6
(22) Anmeldetag: 21.04.2004
(51) Int. Cl.: F16C 17/04, F16C 33/10, F01D 25/16, F16J 15/34

(54) **Axialgleitlageranordnung**
Sliding axial bearing arrangement
Arrangement d'un palier lisse axial

(30) Priorität: 13.05.2003 DE 20307447 U
(43) Veröffentlichungstag der Anmeldung: 24.11.2004
(73) Patentinhaber: Carl Freudenberg KG, 69469 Weinheim (DE)
(72) Erfinder: Simon, Clemens, 82319 Starnberg (DE); Feigl, Peter, 82335 Höhenrain (DE)

(56) Entgegenhaltungen:
- EP-A1- 0 035 891
- DE-A1- 3 921 880
- DE-U1- 29 908 918
- JP-A- 58 057 564
- JP-U- 63 156 432
- US-A- 3 077 296
- US-A- 3 384 428
- US-A- 4 095 857
- US-A- 4 157 834

## Beschreibung

Die Erfindung betrifft eine Axialgleitlageranordnung gemäss dem Oberbegriff des Patentanspruches 1. Sie betrifft insbesondere, jedoch nicht ausschliesslich eine solche, die für die axiale Abstützung der Antriebswellen von Ladeverdichtern von Brennkraftmaschinen geeignet ist.

Für die axiale Abstützung und Abdichtung der Antriebswelle z.B. eines turbomechanisch angetriebenen Kreisel- oder Schraubenspindelverdichters oder Turboverdichters mit Abgasturbinenantrieb erfordern die besonderen Betriebsbedingungen bei derartigen Aggregaten entsprechende Beachtung. So weisen die Antriebswellen in der Regel einen geringen Durchmesser von häufig wesentlich weniger als 40 mm auf, und werden diese Wellen gleichzeitig mit sehr hohen Drehzahlen von z.B. 10⁵ min⁻¹ und mehr in Drehung gesetzt. Übliche Praxis war es bislang, den Funktionen "axiale Abstützung" und "Abdichtung" der Antriebswelle durch getrennte bauliche Massnahmen Rechnung zu tragen. Die Dichtung kann seitens des Inneren des Verdichtergehäuses sowohl Über- als auch Unterdruckbedingungen ausgesetzt sein. Bei Ladeverstärkern sollte dabei gewährleistet sein, dass das abzudichtende gasförmige Medium, bei dem es sich in der Regel um Luft handelt, weitestgehend frei von nicht-gasförmigen Bestandteilen, wie Ölpartikel, gehalten ist, anderenfalls Ölreste in den Verbrennungsraum einer Brennkraftmaschine gelangen würden, die ausser anderen nachteiligen Auswirkungen auf das Betriebsverhalten der Brennkraftmaschine eine Umweltbelastung darstellen (auspuffseitige Rauchfahnenentwicklung). Es kamen bislang zumeist Labyrinthdichtungen oder eine Abdichtung mittels Kolbenringen zur Anwendung, die beide mit einer relaliv hohen Leckage verbunden sind. Bekannt sind auch Gleitringdichtungsanordnungen (EP-A-1 054 196) wegen deren wesentlich geringeren Leckage.

Für die radiale und axiale Lagerung der Antriebswelle wird in allgemeinen eine Gleitlagerung bevorzugt.

Die separaten baulichen Massnahmen für die Dichtung und Lagerung bedeuten einerseits einen erhöhten baulichen und Montageaufwand für die Erfüllung der Funktionen "Abstützung" und "Abdichtung", wobei es sich bei Ladeverstärkern der vorliegenden Art um typische Grossserienprodukte handelt, die geeignet sein sollten, um in Kraftfahrzeugfertigungsstrassen automatisch gehandhabt zu werden. Eine Anforderung dabei ist es, die Anzahl an zu montierenden und handhabenden Teilen so gering wie möglich zu halten.

Ferner ist aus der EP 0035891 A1 eine Axialgleitlageranordnung gemäss dem Oberbegriff des Anspruches 1 bekannt.

Der Erfindung liegt die Aufgabe zugrunde, die Funktionen "axiale Abstützung" und "Abdichtung" einer Welle, insbesondere der Antriebswelle eines Ladeverdichters, im Hinblick auf eine Verringerung der Anzahl an dazu benötigten Bauteilen zu optimieren. Ausserdem soll dabei gleichzeitig die Funktion "Abdichtung" gegenüber diesbezüglichen bekannten Massnahmen verbessert werden.

Diese Aufgabe wird erfindungsgemäss durch die Merkmale des Patentanspruches 1 gelöst. Infolge des erfindungsgemässen Aufbaus kann die Axialgleitlageranordnung nicht nur die Funktion einer insbesondere bei hohen bis sehr hohen Drehzahlen wirksamen axialen Abstützung der Antriebswelle übernehmen, sondern gleichzeitig bietet sie die Möglichkeit, zu einer hochwirksamen Gleitringdichtung erweitert bzw. ausgebaut zu werden. Die dazu erforderlichen Zusatzmittel bestehen im Wesentlichen darin, den rotierenden Druckring der Axialgleitlageranordnung zusätzlich zu einer herkömmlichen Lagerfläche mit einer Gleitfläche auszustatten. Der Druckring übernimmt dadurch unter entsprechender Einsparung an Bauteilen gleichzeitig die Funktion des rotierenden Gleitringes einer Gleitringdichtungsanordnung, die im Übrigen einen grundsätzlich herkömmlichen Aufbau aufweisen kann. Ein weiterer Vorteil ist, dass die Montage der Mittel zur axialen Abstützung einer Welle, insbesondere der Antriebswelle eines Ladeverdichters, vereinfacht wird, da die Montage für die beiden Funktionen "axiale Abstützung" und "Dichtung" in einem Zug erfolgen kann. Wenn erwünscht, kann der Multi-Funktions-Druckring integrales Teil einer Wellenbuchse sein oder darauf vormontiert bereitgestellt werden. Die Anordnung aus Dichtung, Lagerung und Wellenbuchse kann als vormontierte Einheit vorgesehen und in eine abzudichtende Bohrung eines Gehäuses, z.B. Ladeverdichtergehäuses, in montagefreundlicher Weise eingeschoben werden. Eine Montage Teil auf Teil am Einsatzort ist ebenfalls problemlos durchzuführen. Ein weiterer Vorteil aus der Ausgestaltung des Druckringes als Multi-Funktions-Bauteil ist, dass die arbeitsintensiven Schleifbearbeitungen an den Lager- und Gleitflächen des Druckringes, ggf. ohne Umspannen, an ein und derselben Bearbeitungsmaschine durchgeführt werden können. Weitere Vorteile und Wirkungen werden aus der nachfolgenden Beschreibung einer Ausführungsform der Erfindung ersichtlich.

Die Erfindung wird nachfolgend anhand einer Ausführungsform und der Zeichnung näher erläutert. Es zeigen:
- Fig. 1: in längsgeschnittener Ansicht eine Axialgleitlageranordnung nach der Erfindung nach Einbau in einem Verdichtergehäuse, und
- Fig. 2: in Detailansicht die Gleitfläche eines Druckringes der Axialgleitlageranordnung.

Obschon die Erfindung nachfolgend in Verbindung mit der axialen Abstützung und Abdichtung der Antriebswelle eines Ladeverdichters für Brennkraftmaschinen beschrieben wird, versteht es sich, dass die Erfindung auf dieses Einsatzgebiet nicht beschränkt ist. Die Erfindung kann vielmehr vorteilhaft immer dann eingesetzt werden, wenn eine mit hoher Drehzahl betriebene Welle mit vergleichsweise geringem Durchmesser in reibungsminimierender Weise gegenüber einem Gehäuse abgestützt und abgedichtet werden soll und das abzudichtende Medium ein Gas, wie Luft, ist.

Die Axialgleitlageranordnung nach der Erfindung umfasst einen als Gleitlager ausgebildeten Axiallagerbereich und einen Dichtungsbereich als Bestandteil einer Gleitringdichtung. Die Gleitringdichtung umfasst in an sich bekannter Weise einen drehgesichert, jedoch axial beweglich, koaxial zu einer Welle 2 gehaltenen Gleitring 3 und einen auf der Welle 2 zur gemeinsamen Drehung mit dieser angeordneten Ring 4, der erfindungsgemäss als Druckring des Axiallagerbereich ausgebildet ist. Die Ringe 3, 4 haben im wesentlichen radiale, einander zugewandte Gleitflächen 5, 6. In wenigstens einer der Gleitflächen 5, 6, vorzugsweise in der Gleitfläche 6 des Druckringes 4, können, drehrichtungsabhängige, gasförderwirksame Strukturen oder Ausnehmungen 7 durch bekannte Techniken, wie Schleifen, Lasern oder Prägen, eingebracht sein, um bei Drehung der Welle 2 ein Gas zwischen die Gleitflächen 5, 6 zu pumpen und einen Druck aufzubauen. Infolge davon wird unter Trennung der Gleitflächen 5, 6 zwischen diesen ein Gaspolster bildet, um einen Raum oder Bereich A innenumfänglich gegenüber einem Raum oder Bereich B aussenumfänglich der Gleitflächen 5, 6 abzudichten. Derartige gasförderwirksame Ausnehmungen 7 sind dem Fachmann grundsätzlich bekannt. Bezüglich näherer Details, einschliesslich geeigneter Ausgestaltungen der gasförderwirksamen Ausnehmungen kann auf BURGMANN, Gasgeschmierte Gleitringdichtungen, 1997, Selbstverlag, S. 16 ff. ISBN 3-929682-15-X verwiesen werden.

Der drehfeste Gleitring 3 ist in einem an einem Verdichtergehäuse 1 in nicht gezeigter Weise stationär montierten Montagegehäuse 8 aufgenommen und dagegen durch eine Sekundärdichtung 9 in Gestalt eines O-Ringes abgedichtet. Bezüglich näherer Details zu einer O-Ring-Sekundärdichtung einschl. der dafür geeigneten Werkstoffe sowie alternativer Formen von Sekundärdichtungen kann auf BURGMANN, ABC der Gleitringdichtung, 1988, Selbstverlag, S. 161, 272-273, verwiesen werden.

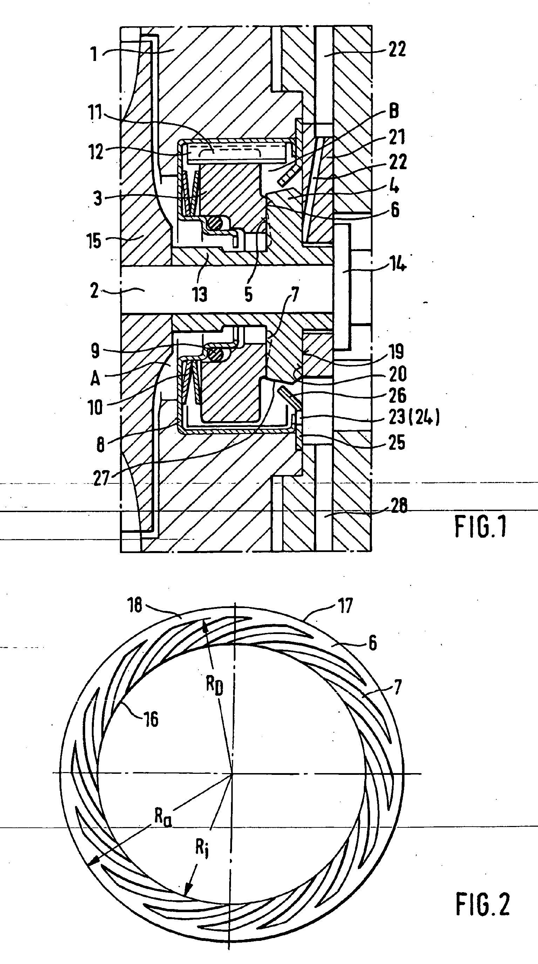

Zwischen dem Montagegehäuse 8 und dem drehfesten Gleitring 3 wirkt ferner eine Federvorspanneinrichtung 10, bei der es sich um eine oder mehrere Wellfedern handeln kann, wie dies in Fig. 1 gezeigt ist. Die Federvorspanneinrichtung 10 bewirkt, dass der drehfeste Gleitring 3 gegen den mit der Welle 2 rotierenden Druckring 4 mit einer geeigneten Vorspannkraft beaufschlagt ist, so dass bei Stillstand der Welle 2 die Gleitflächen 5, 6 der Ringe 3, 4 in dichtendem Eingriff miteinander gehalten sind. Der drehfeste Gleitring 3 weist an seinem äusseren Umfang eine axial sich erstreckende Nut 11 auf (es können auch mehrere derartige Nuten umfänglich verteilt vorgesehen sein), in die ein vom Montagegehäuse 8 radial gegen den Gleitring 3 abstehender Mitnehmerfinger 12 hineinragt. Der drehfeste Gleitring 3 ist demzufolge zwar an einer Relativverdrehung zum Montagegehäuse 8 gehindert, er kann jedoch eine axiale Bewegung vornehmen.

Der rotierende Druckring 4 kann in irgendeiner geeigneten Weise auf der Welle 2 zur gemeinsamen Drehung mit dieser montiert sein. Bei der vorliegenden Ausführungsform ist er integrales Teil einer auf der Welle 2 aufgesetzten Buchse 13, die axial zwischen einem Wellenabsatz 14 und einem an der Welle 2 montierten Verdichterlaufrad 15 eingeklemmt ist, so dass sich die Drehung der Welle 2 schlupffrei auf den Druckring 4 übertragen lässt. Der Druckring 4 könnte auch als separates, auf der Welle 2 oder einer Wellenbuchse montiertes Bauteil ausgebildet sein.

Bevorzugte Materialien für den Druckring 4 sind hochfeste Werkstoffe wie geeignete Stahlmateriallen mit oder ohne gleitflächenseitiger Beschichtung. Der stationäre Gleitring 3 besteht zum Zwecke der Verschleissminimierung vorzugsweise aus tribologisch wirksamen Materialien wie einem geeigneten Kohlenstoffmaterial, und kann, wenn erwünscht, gleitflächenseitig nach bekannten Verfahren antimonimprägniert sein.

Die gasförderwirksamen Ausnehmungen 7 in der Gleitfläche 6 des Druckringes 4 sind in grosser Anzahl in gleichem Abstand umfänglich verteilt vorgesehen. Jede gasförderwirksame Ausnehmung 7 erstreckt sich vom inneren Umfang 16 mit dem Radius Rᵢ der Gleitfläche 6 pflugscharartig gekrümmt bis zu einem radialen Radius R_{D} der Gleitfläche 6, der in einem radialen Abstand von deren äusseren Umfang 17 mit dem Radius Rₐ steht, so dass ein Dammbereich 18 mit dem Radius R_{D} nahe dem äusseren Umfang 17 verbleibt, der frei von gasförderwirksamen Ausnehmungen 7 ist.

Das Verhältnis der von den gasförderwirksamen Ausnehmungen 7 bedeckten Fläche F_{GFA} zur Gesamtfläche F_{G} der Gleitfläche 6 ist vorzugsweise so abgestimmt, dass sowohl bei normalem Betrieb als auch beim Anlaufen und während der Stillsetzung der Welle 2, selbst bei geringen Wellendurchmessern von z.B. 8 bis 25 mm, eine direkte Berührung zwischen den Gleitflächen 5, 6 vermieden wird, indem dazwischen mit Hilfe der gasförderwirksamen Ausnehmungen 7 ein abdichtendes Gaspolster aufgebaut wird. Es wurde festgestellt, dass diese Wirkungen erhalten werden, wenn bestimmte Faktoren für das Flächenverhältnis F_{GFA /} F_{G} eingehalten werden. Insbesondere sollte das Flächenverhältnis im Bereich zwischen 0,35 und 0,65, vorzugsweise 0,4 und 0,6 liegen. Ferner sollten die radialen Abmessungen (Rₐ -Rᵢ) der Gleitfläche 6 einen minimalen Betrag nicht unterschreiten und die radialen Abmessungen (Rₐ - R_{D}) des Dammbereiches 18 minimal gehalten werden. Längs des Umfangs der Gleitfläche 6 können z.B. sechzehn gasförderwirksame Ausnehmungen 7 mit pflugscharartig verlaufenden voreilenden und nacheilenden Kanten vorgesehen sein.

Es wurde ferner festgestellt, dass besonders vorteilhafte Betriebseigenschaften des Dichtungsbereiches erzielt werden, wenn ein Belastungsverhäitnis k, definiert ais das Verhältnis einer hydraulischen, durch den Druck des abzudichtenden Mediums beaufschlagten Wirkfläche des Dichtungsbereiches zur Fläche der Gleitfläche in einem bestimmten Bereich k = 0,5 bis 1,2 liegt.

Bezüglich weiterer Details zu geeigneten radialen Abmessungen (Rₐ -Rᵢ) der Gleitfläche 6 und radialen Abmessungen (Rₐ - R_{D}) des Dammbereiches 18 kann auf die EP-A-1 054 196 verwiesen werden.

Dass die gasförderwirksamen Ausnehmungen 7 bevorzugt vom inneren Umfang 16 der Gleitfläche 6 ausgehen, hat seinen Grund darin, dass das abzudichtende Medium im Bereich A praktisch frei von nicht-gasförmigen Bestandteilen, z.B. Ölpartikeln, ist, die, wenn sie in den Bereich zwischen den Gleitflächen 5, 6 gelangen würden, schädliche Auswirkungen auf das Betriebsverhalten des Dichtungsbereiches ausüben können. Dagegen ist der Anteil an nicht-gasförmigen Bestandteilen, z.B. Ölpartikeln, im atmosphärenseitigen gasförmigen Medium, z.B. der Luft im Raum B zwar gering, jedoch nicht vernachlässigbar, worauf nachfolgend näher eingegangen wird. Die Ausmündung der gasförderwirksamen Ausnehmungen 7 am inneren Umfang der Gleitfläche 6 gewährleistet eine Leckageströmung des abzudichtenden Mediums vom Raum A in Richtung auf den Raum B und verhindert dadurch wirksam ein Eindringen von nicht-gasförmigen Bestandteilen aus dem Raum B in den Raum A.

Wie in Fig. 1 ferner gezeigt ist, ist der Druckring 4 an seiner der Gleitfläche 6 abgewandten Stirnseite mit einer im Wesentlichen radial ausgerichteten Lagerfläche 19 versehen, die mit einer gegenüberliegenden parallel ausgerichteten Lagerfläche 20 eines am Gehäuse 1 drehfest montierten Gegenringes 21 des Axiallagerbereiches zusammenwirkt, um ein Axialgleitlager zu bilden. Während des Betriebes der Axialgleitlageranordnung wird zwischen den Lagerflächen 19, 20 ein Ölfilm gebildet, der in einer in der Gleitlagertechnik bekannten Weise eine verschleissminimierte Relativbewegung zwischen den Lagerflächen 19, 20 ermöglicht.

Die Ölfilmbildung kann dadurch gefördert werden, dass in den Bereich zwischen den Lagerflächen 19, 20 ein Lageröl über eine Ölzuführpassage 22, die vorzugsweise am oder nahe dem inneren Umfang der Lagerfläche 20 des Gegenringes 21 ausmündet, zugeführt wird. Beim Betrieb der Axialgleitlageranordnung wird das Lageröl infolge der einwirkenden Zentrifugalkräfte zu einer Bewegung vom inneren zum äusseren Umfang der Lagerflächen 19, 20 veranlasst. Das Lageröl wird vorzugsweise über ein oder mehrere Passagen 22, die den Gegenring 21 duchsetzen, mit einem geringen Überdruck von z.B. 1 bis 2 bar zugeführt und verlässt die Lagerflächen 19, 20 am äusseren Umfang des Druckringes 4 in einem im Wesentlichen drucklosen Zustand. Beim Lageröl kann es sich um das Betriebsöl (Motoröl) einer Brennungskraftmaschine handeln; es könnte jedoch auch eine separate Ölversorgungsquelle vorgesehen sein.

Der Gegenring 21 besteht vorzugsweise aus einem geeigneten Lagermaterial, wie Bronze. Die Lagerflächen 19, 20 sind in geeigneter Weise geschliffen. Vorzugsweise hat die Lagerfläche 19 des Druckringes 4 zur Verbesserung der Laufeigenschaften gegenüber dem Gegenring 21 einen Kreuzschliff.

Eine Ölrückhalteeinrichtung 23 ist vorgesehen, die verhindert, dass das am äusseren Umfang der Lagerflächen 19, 20 austretende Lageröl ungehindert in den Raum B geschleudert werden kann, um eine übermässige Belastung des Raumes B mit Lagerölpartikeln zu verhindern. Obschon andere derartige Einrichtungen vorgesehen werden könnten, umfasst die in der Zeichnung gezeigte bevorzugte Ölrückhalteeinrichtung 23 ein Winkelblech 24, das mit einem radialen Schenkel 25 am Gehäuse 1 bzw. Gegenring 21 in geeigneter Weise befestigt, z.B. angeschraubt ist, und einen abgewinkelten Schenkel 26 hat, der dachartig die Austrittsstelle des Lageröls am äusseren Umfang der Lagerflächen 19, 20 sowie wenigstens einen Teil des äusseren Umfanges des Druckringes 4 aussen in einem radialen Abstand umfasst bzw. überdeckt. Das aus den Lagerflächen 19, 20 im Wesentlichen radial herausgeschleuderte Lageröl trifft daher auf den abgewinkelten Schenkel 26 des Winkelbleches 24 und wird zurück nach innen geleitet, so dass nur ein geringer Teil des Lageröls, wenn überhaupt, in den Bereich nahe den Gleitflächen 5, 6 des Dichtungsbereiches gelangen kann.

Zur Verstärkung der Ölrückhaltewirkung kann ferner der äussere Umfang des Druckringes 4, wie dargestellt, eine im Querschnitt spitzdachförmige Konfiguration haben, wie dies bei 27 angedeutet ist, so dass eine radial nach aussen weisende Spritzkante gebildet ist, die einen Zugang des Lageröls zu den Gleitlagerflächen 5, 6 weiter verengt.

Das aus den Lagerflächen 19, 20 ausgetretene und durch die Ölrückhalteeinrichtung 23 an einer Verbreitung im Raum B gehinderte Lageröl kann sich an einer unteren Stelle oder Wanne (nicht bezeichnet) der Axialgleitlageranordnung ansammeln und von dort über eine Ölabführpassage 28 nach aussen, z.B. zum Motorraum der Brennungskraftmaschine zurückgeführt werden.

Ferner könnten die gasförderwirksamen Ausnehmungen statt im Druckring auch im drehfesten Gleitring, ggf. auch in beiden Ringen, eingebracht sein.

Der Schutzumfäng der Erfindung beschränkt sich auf die Ansprüche.

## Patentansprüche

1. Axialgleitlageranordnung mit einem zur gemeinsamen Drehung mit einem rotierenden Bauteil vorgesehenen Druckring (4), einem zur drehfesten Montage an einem stationären Bauteil vorgesehenen Gegenring (21), wobei der Druck- und Gegenring einander zugewandte Lagerflächen (19,20) aufweisen, und einem drehfesten Gleitring (3) mit einer radialen Gleitfläche (5), wobei der Druckring (4) ferner mit einer radialen Gleitfläche (6) an einer dem Gegenring (21) abgewandten Stirnfläche zum Zusammenwirken mit der radialen Gleitfläche (5) des drehfesten Gleitringes (3) einer Gleitringdichtungsanordnung versehen ist, wobei die Gleitringdichtung anordnung durch den drehfeslen Gleitring (3) und den Drusckring (4) gebildet ist, **dadurch gekennzeichnet, dass**
in der radialen Gleitfläche (5,6) des Druckringes (4) und/oder des feststehenden Gleitringes (3) eine Vielzahl umfänglich beabstandeter gasförderwirksamer Ausnehmungen (7) vorgesehen sind, die sich von einem Umfang der betreffenden Gleitfläche in Richtung auf den anderen Umfang erstrecken und in einem radialen Abstand vom anderen Umfang endet, und
eine die Lagerflächen (19, 20) aussenumfänglich umgreifende Ölrückhalteeinrichtung (23) vorgesehen ist.

2. Axialgleitlageranordnung nach Anspruch 1, **dadurch gekennzeichnet, dass** der Gegenring (21) wenigstens eine an oder nahe des radial inneren Bereiches seiner Lagerfläche (20) ausmündende Passage (22) zur Zuführung von Lageröl zu den Lagerflächen (19,20) aufweist.

3. Axialgleitlageranordnung nach Anspruch 1 oder 2, **gekennzeichnet durch** eine Einrichtung (28) zur Abführung von Lageröl aus einem Bereich aussenumfänglich der Lagerflächen (19,20).

4. Axialgleitlageranordnung nach einem der vorhergehenden Ansprüche, **dadurch gekennzeichnet, dass** die Ölrückhalteeinrichtung (23) ein Winkelblech (24) mit einem radialen Schenkel (25) und einem abgewinkelten Schenkel (26) umfasst, wobei der abgewinkelte Schenkel (26) dachartig eine Austrittsstelle des Lageröls am äusseren Umfang der Lagerflächen (19, 20) sowie wenigstens einen Teil des äusseren Umfangs des Druckringes (4) in einem radialen Abstand überdeckt.

5. Axialgleitlageranordnung nach einem der vorhergehenden Ansprüche, **dadurch gekennzeichnet, dass** ein äusserer Umfang des Druckringes (4) eine im Querschnitt spitzdachförmige Konfiguration (27) aufweist.

6. Axialgleitlageranordnung nach Anspruch 5, **dadurch gekennzeichnet, dass** an der betreffenden Gleitfläche (5,6) ein Flächenverhältnis F_{GFA} / F_{G} vorgesehen ist, das im Bereich zwischen 0,35 und 0,65, vorzugsweise 0,4 und 0,6, liegt, worin bedeuten: F_{GFA} = auf die Gleitfläche projizierte Gesamtfläche der gasförderwirksamen Ausnehmungen (7), F_{G} = Gesamtfläche der Gleitfläche.

7. Axialgleitlageranordnung nach Anspruch 5 oder 6, **dadurch gekennzeichnet, dass** ein Belastungsverhältnis k, definiert als das Verhältnis einer hydraulisch durch den Druck des abzudichtenden Mediums belasteten Wirkfläche F_{H} der Gleitringdichtungsanordnung zur Fläche F_{G} der Gleitfläche (5,6), im Bereich zwischen 0,5 und 1,2 liegt.

8. Axialgleitlageranordnung nach Anspruch 5, **dadurch gekennzeichnet, dass** die gasförderwirksamen Ausnehmungen (7) am Druckring (4) vorgesehen sind.

9. Axialgleitlageranordnung nach einem der vorhergehenden Ansprüche, **dadurch gekennzeichnet, dass** der Druckring (4) aus einem Stahlmaterial gebildet ist.

10. Axialgleitlageranordnung nach einem der vorhergehenden Ansprüche, **dadurch gekennzeichnet, dass** der Gegenring (21) aus einem Lagermaterial, insbesondere Lagerbronze, gebildet ist.

## Claims

1. Axial plain bearing arrangement having a thrust ring (4) which is provided for conjoint rotation with a rotating component, having a counterpart ring (21) which is provided for being mounted in a rotationally fixed manner on a static component, wherein the thrust ring and counterpart ring have bearing surfaces (19, 20) facing one another, and having a rotationally fixed slide ring (3) with a radial sliding surface (5), wherein the thrust ring (4) is furthermore provided, on an end surface facing away from the counterpart ring (21), with a radial sliding surface (6) for interacting with the radial sliding surface (5) of the rotationally fixed slide ring (3) of a slide ring seal arrangement, wherein the slide ring seal arrangement is formed by the rotationally fixed slide ring (3) and the thrust ring (4), **characterized in that**
a multiplicity of circumferentially spaced-apart recesses (7) which have a gas-conveying action are provided in the radial sliding surface (5, 6) of the thrust ring (4) and/or of the static slide ring (3), which recesses extend from one circumference of the respective sliding surface in the direction of the other circumference and end at a radial distance from the other circumference, and
an oil retaining device (23) is provided which engages around the bearing surfaces (19, 20) at the outer circumference.

2. Axial plain bearing arrangement according to Claim 1, **characterized in that** the counterpart ring (21) has at least one passage (22), which opens out at or close to the radially inner region of its bearing surface (20), for supplying bearing oil to the bearing surfaces (19, 20).

3. Axial plain bearing arrangement according to Claim 1 or 2, **characterized by** a device (28) for discharging bearing oil from a region at the outer circumference of the bearing surfaces (19, 20).

4. Axial plain bearing arrangement according to one of the preceding claims, **characterized in that** the oil retaining device (23) comprises an angled plate (24) with a radial leg (25) and an angled leg (26), wherein the angled leg (26) covers an outlet point for the bearing oil at the outer circumference of the bearing surfaces (19, 20), and covers at least a part of the outer circumference of the thrust ring (4), in the manner of a roof and with a radial spacing.

5. Axial plain bearing arrangement according to one of the preceding claims, **characterized in that** an outer circumference of the thrust ring (4) has a pitched-roof-like configuration (27) in cross section.

6. Axial plain bearing arrangement according to Claim 5, **characterized in that**, at the respective sliding surface (5, 6), an area ratio F_{GFA} / F_{G} is provided which lies in the range between 0.35 and 0.65, preferably 0.4 and 0.6, wherein F_{GFA} is the overall area, projected onto the sliding surface, of the recesses (7) which have a gas-conveying action, and F_{G} is the overall area of the sliding surface.

7. Axial plain bearing arrangement according to Claim 5 or 6, **characterized in that** a load ratio k, defined as the ratio of an active area F_{H}, which is subjected to hydraulic load by the pressure of the medium to be sealed off, of the slide ring seal arrangement to the area F_{G} of the sliding surface (5, 6), lies in the range between 0.5 and 1.2.

8. Axial plain bearing arrangement according to Claim 5, **characterized in that** the recesses (7) which have a gas-conveying action are provided on the thrust ring (4).

9. Axial plain bearing arrangement according to one of the preceding claims, **characterized in that** the thrust ring (4) is formed from a steel material.

10. Axial plain bearing arrangement according to one of the preceding claims, **characterized in that** the counterpart ring (21) is formed from a bearing material, in particular bearing bronze.

## Revendications

1. Agencement de palier lisse axial comprenant une bague de pression (4) prévue pour une rotation conjointe avec un composant rotatif, une bague conjuguée (21) prévue pour un montage solidaire en rotation sur un composant stationnaire, la bague de pression et la bague conjuguée présentant des surfaces de palier tournées l'une vers l'autre (19, 20), et une bague de glissement (3) solidaire en rotation avec une surface de glissement radiale (5), la bague de pression (4) étant en outre pourvue d'une surface de glissement radiale (6) sur une surface frontale opposée à la bague conjuguée (21) en vue de coopérer avec la surface de glissement radiale (5) de la bague de glissement (3) solidaire en rotation d'un agencement de joint d'étanchéité de bague de glissement, l'agencement de joint d'étanchéité de bague de glissement étant formé par la bague de glissement (3) solidaire en rotation et par la bague de pression (4), **caractérisé en ce qu'**une pluralité d'évidements (7) agissant de manière à refouler du gaz et espacés sur la périphérie sont prévus dans la surface de glissement radiale (5, 6) de la bague de pression (4) et/ou de la bague de glissement (3) fixe, lesquels évidements s'étendent depuis une périphérie de la surface de glissement en question dans la direction de l'autre périphérie et se terminent à une distance radiale de l'autre périphérie, et
un dispositif de retenue d'huile (23) est prévu de manière à venir en prise avec la périphérie extérieure des surfaces de palier (19, 20).

2. Agencement de palier lisse axial selon la revendication 1, **caractérisé en ce que** la bague conjuguée (21) présente au moins un passage (22) pour l'alimentation en huile de palier aux surfaces de palier (19, 20), lequel passage débouche au niveau de la région radialement interne de sa surface de palier (20) ou à proximité de celle-ci.

3. Agencement de palier lisse axial selon la revendication 1 ou 2, **caractérisé par** un dispositif (28) pour évacuer l'huile de palier hors d'une région du côté de la périphérie extérieure des surfaces de palier (19, 20).

4. Agencement de palier lisse axial selon l'une quelconque des revendications précédentes, **caractérisé en ce que** le dispositif de retenue d'huile (23) comprend une tôle coudée (24) avec une branche radiale (25) et une branche coudée (26), la branche coudée (26) recouvrant, en forme de toit, une zone de sortie de l'huile de palier au niveau de la périphérie extérieure des surfaces de palier (19, 20) ainsi qu'au moins une partie de la périphérie extérieure de la bague de pression (4), à distance radiale.

5. Agencement de palier lisse axial selon l'une quelconque des revendications précédentes, **caractérisé en ce qu'**une périphérie extérieure de la bague de pression (4) présente une configuration (27) de section transversale en forme de toit pointu.

6. Agencement de palier lisse axial selon la revendication 5, **caractérisé en ce que** sur la surface de glissement en question (5, 6) est prévu un rapport de surface F_{GFA} / F_{G} qui est compris dans une plage de 0,35 à 0,65, de préférence de 0,4 à 0,6, où F_{GFA} signifie la surface totale en projection sur la surface de glissement des évidements (7) agissant de manière à refouler du gaz, et F_{G} signifie la surface totale de la surface de glissement.

7. Agencement de palier lisse axial selon la revendication 5 ou 6, **caractérisé en ce qu'**un rapport de contrainte k, défini comme le rapport d'une surface active F_{H} de l'agencement de joint d'étanchéité de bague de glissement, sollicitée hydrauliquement par la pression du milieu à étancher, à la surface F_{G} de la surface de glissement (5, 6), est compris dans une plage de 0,5 à 1,2.

8. Agencement de palier lisse axial selon la revendication 5, **caractérisé en ce que** les évidements (7) agissant de manière à refouler du gaz sont prévus sur la bague de pression (4).

9. Agencement de palier lisse axial selon l'une quelconque des revendications précédentes, **caractérisé en ce que** la bague de pression (4) est formée d'un matériau en acier.

10. Agencement de palier lisse axial selon l'une quelconque des revendications précédentes, **caractérisé en ce que** la bague conjuguée (21) est formée d'un matériau de palier, notamment du bronze de palier.
